# EUROPÄISCHE PATENTSCHRIFT

(11) **EP 1 517 967 B1**
(45) Veröffentlichungstag und Bekanntmachung des Hinweises auf die Patenterteilung: **17.12.2008**
(21) Anmeldenummer: 03760572.2
(22) Anmeldetag: 24.06.2003
(51) Int. Cl.: C09D 5/24, C03C 17/00

(54) **BESCHICHTUNGSMATERIAL**
COATING MATERIAL
MATERIAU DE REVETEMENT

(30) Priorität: 24.06.2002 DE 10228204; 26.06.2002 DE 10228626
(43) Veröffentlichungstag der Anmeldung: 30.03.2005
(73) Patentinhaber: Air Products and Chemicals, Inc., Allentown, PA 18195-1501 (US)
(72) Erfinder: BURGARD, Detlef, 66333 Völklingen (DE); NASS, Rüdiger, 66292 Riegelsberg (DE)
(74) Vertreter: Jönsson, Hans-Peter
(86) Internationale Anmeldenummer: PCT/DE2003/002107
(87) Internationale Veröffentlichungsnummer: WO 2004/000954

(56) Entgegenhaltungen:
- EP-A- 0 604 969
- US-B1- 6 368 470

## Beschreibung

Die vorliegende Erfindung betrifft leitfähige Nanopartikel mit verbesserten Eigenschaften und transparente Beschichtungen daraus.

Transparente leitfähige Beschichtungen besitzen hohe Bedeutung und sind bekannt u. a. für Displays (CRT, LCD, OLED,...) und/oder antistatische Beschichtungen. Standardverfahren zur Herstellung umfassen u.a. zunächst die Gasphasenbeschichtung (Sputtern, CVD, PVD,....) von Flachglas mit dünnen, leitfähigen, im Sichtbaren transparenten Schichten. Als Schichtmaterial dienen, neben (Edel)metallen, leitende oder halbleitende dotierte Oxide wie z.B. ATO (SnO₂:SB), FTO (SnO₂:Sb), FTO (SnO₂F), AZO (ZnO:Al) oder ITO (In₂O₃:Sn). Über diese Verfahren werden in der Regel dichte Schichten erhalten. Dieses ist als Standardverfahren zur Beschichtung von Flachglas bekannt, um hochwertige Schichten für Flachglas zu erzeugen, wobei eine ausgereifte Technologie zur Verfügung steht. Die verwendeten Sputteranlagen sind sehr teuer (2-3-stellige Millionenbeträge) und arbeiten nur bei sehr großen Durchsätzen rentabel (Beschichtung mehrerer 100T m²/a). Zudem sind sie technisch sehr aufwendig und haben einen hohen Materialverbrauch, denn wenn zu verdampfendes Material oder ein Target verdampft wird, wird Dampf nur zum Teil auf das zu beschichtende Substrat abgeschieden, während sich der Rest irgendwo im Inneren der Maschine absetzt. Zudem sind solche Anlagen unflexibel, so dass Klein- oder Sonderserien kaum machbar sind, insbesondere, da mit Sputteranlagen fast ausschließlich flache Geometrien beschichtet werden können; andere Geometrien sind nur bedingt möglich und es muss hier bei jedem Geometriewechsel die entsprechende Anlage umkonstruiert werden. Dies ist etwa problematisch für die Automobilverscheibung, denn es gibt keine absolut flachen Autoscheiben zumal auch der Versuch flache Scheiben zu besputtern und dann zubiegen, bisher nicht funktioniert. Auch eine Beschichtung von Polymeren und Folien ist nur sehr bedingt möglich.

Es existieren auch bereits Ansätze, solche Schichten über den Einsatz leitfähiger Nanopartikel zu realisieren (z.B. ITO); solche Verfahren weisen u.a. als Vorteile eine einfache Beschichtungstechnik, z.B. über naßchemische Verfahren (Lackieren, Sprühen, Drucken, Tauchen, spin-coating,...)auf, ermöglichen das direkte Aufbringen von Strukturen, haben einen geringeren technischen Aufwand mit entsprechend geringeren Investitionskosten zur Folge, sind geometrieunabhängig, nutzen das Material besser aus, haben höhere Flexibilität und erlauben eine Beschichtung von Poymeren und Folien.

Eine Grundvoraussetzung ist aber die Verfügbarkeit von z.B. ITO-Nanopulvern geeigneter Teilchengröße und Redispergierbarkeit mit entsprechenden Eigenschaften. Aus der US-PS 5.518.810 (Mitsubishi) ist bekannt, dass ein bestimmter Farbton mit optimalen Eigenschaften in Bezug auf die IR-Abschirmung korreliert; typisch deutet blau danach auf eine hohe Anzahl von Sauerstoff-Fehlstellen hin, also auf eine hohe Ladungsträgerdichte, die durch Sauerstoff-Fehlstellen bewirkt wird. Diese werden in der Regel in ITO dadurch erzeugt, dass das Pulver oder Schichten aus dem Pulver unter Inertgas oder reduzierender Atmosphäre getempert werden, und zwar bei Temperaturen oberhalb 250°C. Dieser Prozess führt auch dazu, dass blaues Pulver eine höhere Leitfähigkeit hat als nicht unter reduzierender Atmosphäre nachbehandeltes und sonst gelbes Pulver und er führt dazu, dass z.B. durch Wärmebehandlung bei 500°C an Luft verdichtete Schichten -nach Inertgas / reduzierender Behandlung bei Temperaturen oberhalb 250°C- deutlich höhere Leitfähigkeiten zeigen. Eine nachträgliche Temperaturbehandlung von ITO-Schichten unter reduzierender / inerter Atmosphäre bei Temperaturen oberhalb 250°C ist Stand der Technik. Bei vielen technischen Anwendungen ist eine solche Nachbehandlung aber oft nicht wünschenswert oder nicht möglich, da die beschichteten Gegenstände bei der benötigten Temperatur zerstört werden, z.B. bei CRT oder leitfähigen und/oder antistatische Beschichtungen auf Kunststoff. Gleichzeitig steigen aber auch die Anforderungen und der Bedarf an hochleitfähigen, transparenten Beschichtungen auf Kunnststoff.

Die Aufgabe der vorliegenden Erfindung besteht darin, Neues für die gewerbliche Anwendung bereitzustellen.

Die Lösung dieser Aufgabe wird in unabhängiger Form beansprucht.

Es ergibt sich somit erfindungsgemäß eine Verbesserung der Leitfähigkeit von Beschichtungen, die ITO Nanopartikel enthalten, und zwar bei gleichzeitig hoher Transparenz im Sichtbaren mit einer einfachen Beschichtungstechnik, insbesondere durch nasschemische Verfahren (Lackieren, Sprühen, Drucken, Tauchen, spin-coating.....) bei geringeren, technischen Aufwendungen und geringeren Investitionskosten.

Die bessere Leitfähigkeit eröffnet dabei neue Anwendungsfelder und erlaubt, dass weniger Material (ITO) für gleiche Leitfähigkeit verbraucht wird, was zu günstigeren Endprodukten führt. Typisch sollte angenommen werden, dass, wenn z.B. Schichten hergestellt werden, die aus leitfähigen Ausgangspulvern bestehen und/oder bei denen leitfähige Partikel in einer Matrix eingebunden sind, die Leitfähigkeit dieser Schichten um so höher ist, je höher die Leitfähigkeit der Ausgangspulver -oder partikel ist. Die Erfindung hat jedoch erkannt, dass aus gelbem Pulver mit an sich schlechterer Leitfähigkeit Schichten mit besserer Leitfähigkeit hergestellt werden können als aus blauem Pulver, das als solches eine höhere Leitfähigkeit aufweist. Dies wird anhand von Musterbeispielen belegt.

### Beispiel 1:

### Es wird gelbes ITO-Pulver wie folgt hergestellt:

Nanokristalline In₂O₃/SnO₂ (ITO) Pulver werden aus einer wässrigen Lösung über einen Kofällungsprozeß erzeugt, bei dem lösliche In- bzw. Sn-Komponenten durch pH-Wert Erhöhung ausgefällt wurden. In diesem Beispiel wurden die Konzentrationen dieser Verbindungen so gewählt, dass die Sn-Konzentration 5 at.% bezogen auf In betrug. Grundsätzlich ist aber die Sn-Konzentration beliebig einstellbar.
Nach Abtrennen des Reaktionsproduktes wird dieses getrocknet und zur Einstellung der kristallinen Phase bei 300 °C unter normaler Luftatmosphäre 1 h getempert.
Anschließend wird das kristalline In₂O₃/SnO₂ in verschiedene Proben geteilt und die einzelnen Proben wurden für verschiedene Zeiten unter Formiergas bei 300°C nachgetempert (s. Tabelle 1).

Pulver mit Farbwerten, die zwischen den in Tabelle 1 aufgelisteten Maximalwerten (IT-05 HCB und IT-05 HCG) liegen sowie Schichten mit Gelbwerten zwischen den entsprechenden Werten aus Tabelle 1, können auch erhalten werden durch Mischungen der verschiedenen Pulver.

**Tabelle 1**

| Probenbezeichnung | Behandlungsdauer | Farbwert (Pulver) | Gelbwert (Schicht) |
|---|---|---|---|
| IT-05 HCB | 1,5 h | x=0,294, | 0,12 |
| | | y=0,332 | |
| BG9010 | 1 h | x=0,301, | 1,17 |
| | | y=0,341 | |
| BG8515 | 50 min | x=0,306, | 2,97 |
| | | y=0,346 | |
| BG8020 | 45 min | x=0,310, | 4,63 |
| | | y=0,351 | |
| BG7030 | 40 min | x=0,318, | 6,4 |
| | | y=0,361 | |
| BG5050 | 30 min | x=0,338, | 12,66 |
| | | y=0,381 | |
| IT-05 GN | 1 h, N₂ | x=0,404 | 22,7 |
| | | y=0,418 | |
| IT-05 HCG | ---------------- | x=0,414, | 23,8 |
| | | y=0,421 | |

Aus gelbem ITO-Pulver praktisch weitgehend gleicher Partikelgröße und bei gleicher Dispersion wurden über spin-coating Schichten mit einem organischen Binder abgeschieden und bei 120°C 1h getrocknet. Die resultierende Schichtdicke und so erhaltenen transparenten Kompositschichten betrug 3 µm. Die Leitfähigkeit der Schicht mit blauem Pulver betrug 1,8 kOhm/square; die der Schicht aus gelbem Pulver 0,8 kOhm/square. An beiden Schichten wurde der Gelbwert mit einem Color-pen (Dr. Lange) gemessen, gem. DIN 6167 und ASTM D 1925 ausgewertet (Normlichtart C; Normalbetrachter 2°). Während der Gelbwert der Schicht aus blauem Pulver unter 0,1 lag, betrug der Gelbwert der Schicht aus dem gelben Pulver 23,8.

### Beispiel 2:

Aus gelbem ITO-Pulver und aus blauem ITO-Pulver praktisch weitgehend gleicher Partikelgröße und gleicher Dispersion wurden über spin-coating transparente Schichten auf der Frontplatte einer Bildröhre (CRT) abgeschieden und zwar mit einer Schichtdicke von 100 nm. Nach kurzem Antrocknen bei Raumtemperatur wurde um die ITO Schicht gegen Verkratzen zu schützen, mit einer Lösung eines hydrolysierbaren Si-Alkoholates über spin-coating nachbeschichtet. Das zweifach beschichtete Substrat wurde 30 min bei 180°C ausgeheizt. Nach Abkühlen beträgt die Leitfähigkeit des Zwei-Schicht Systems für das blaue Pulver 8,5 kΩ. und für das gelbe Pulver 6,1 kΩ. Die Oberflächenwiderstände der Schichten wurden bestimmt mit einem 4-Punkt Leitfähigkeitsmessgerät (Loresta GP, Mitsubishi Chemical Corporation).

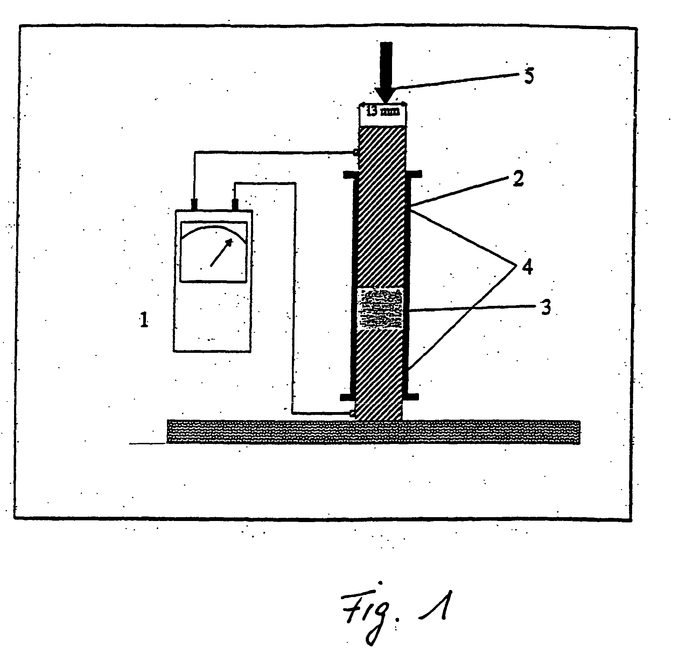

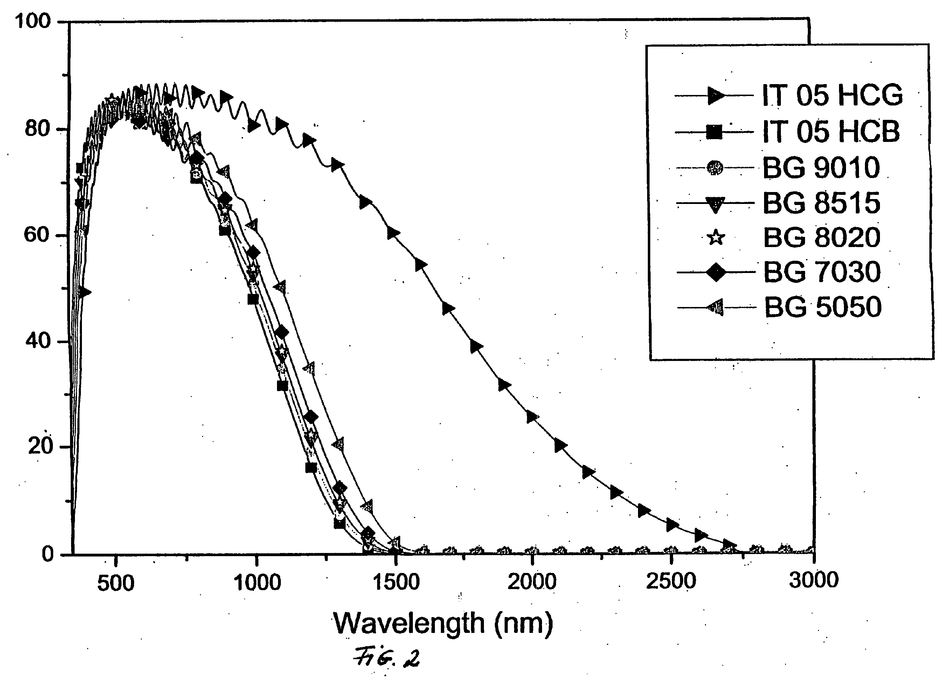

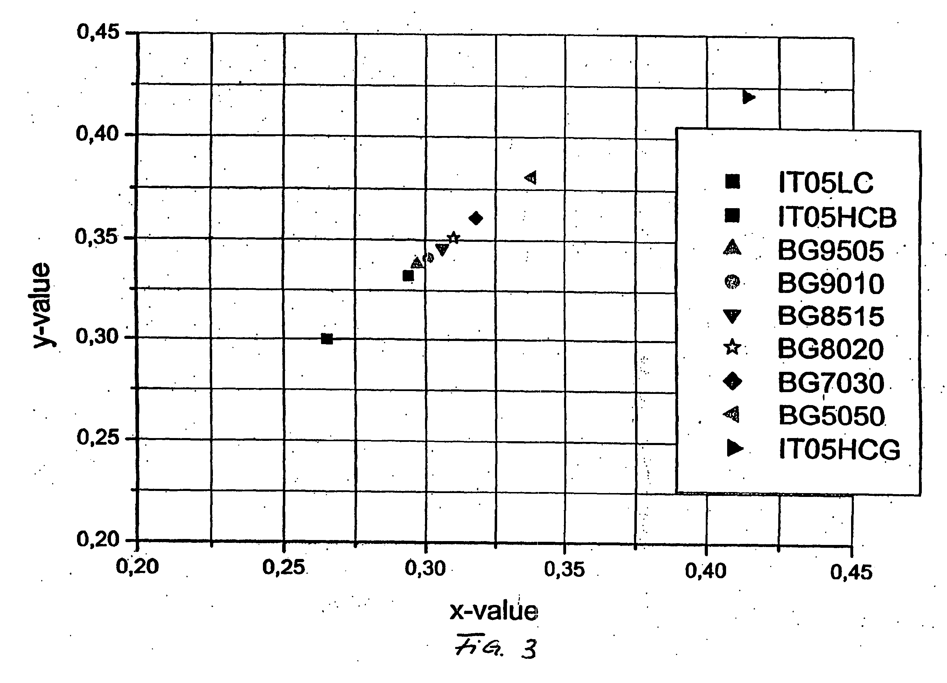

Bei den Messungen wurde die Leitfähigkeit der Pulver mit der in Fig. 1 skizzierten Messanordnung bestimmt.

Diese Messanordnung zur Bestimmung der Leitfähigkeit der Pulver zeigt mit Bezugszahl 1 ein Messgerät (Multimeter), mit Bezugszahl 2 ein Glasrohr, mit Bezugszahl 3 Pulver, mit Bezugszahl 4 einen Pressstempel aus Stahl und deutet bis 5 eine Druckbeaufschlagung an.

In die in Fig. 1 beschriebene Messvorrichtung wurden je 3,3g. Pulver eingefüllt. Anschließend wurde der obere Pressstempel eingeführt und mit dem Messgerät kontaktiert. Der obere Pressstempel wurde dann mit verschiedenen Gewichten belastet und der resultierende Widerstand über die so verdichtete Pulverschüttung wurde mit einem handelsüblichen Multimeter gemessen. Diese Messungen ergaben folgende Werte:

| | | Widerstand (Ohm) | |
|---|---|---|---|
| Gewicht (kg) | Druck (kPa) | Blaues Pulver | Gelbes Pulver |
| 1 | 77 | 42 | 1140 |
| 1,5 | 115 | 32 | 820 |
| 1,8 | 138 | 28 | 640 |

Die Farbwerte der Pulver waren wie folgt:

| | | |
|---|---|---|
| Blau: | x = 0,294; | Y = 0,332 |
| Gelb: | x = 0,414; | Y = 0,421 |

Die Charakterisierung der Pulver erfolgt über Leitfähigkeit und Farbton, die Charakterisierung der Schichten über Gelbwert und Leitfähigkeit.

## Patentansprüche

1. Leitfähiges, IR-absorbierendes Beschichtungsmaterial aus Indiumzinnoxid, **dadurch gekennzeichnet, dass** der Gelbwert über 15 liegt.

2. Schicht aus einem leitfähigen Pulver nach Anspruch 1.

## Claims

1. A conductive IR-absorbing coating material of indium tin oxide, **characterized by** having a yellowness index of above 15.

2. A layer consisting of a conductive powder according to claim 1.

## Revendications

1. Matériau de revêtement conducteur absorbant le rayonnement infrarouge, composé d'oxyde d'étain et d'indium, **caractérisé en ce que** l'indice de jaune est supérieur à 15.

2. Couche composée de poudre conductrice selon la revendication 1.
